# EUROPEAN PATENT APPLICATION

(11) **EP 4 786 224 A1**
(43) Date of publication of application: **05.08.2026**
(21) Application number: 24870640.0
(22) Date of filing: 23.09.2024
(51) Int. Cl.: B60H 1/04, B60H 1/00, F28F 27/00

(54) **FLUID DISTRIBUTION ASSEMBLY AND THERMAL MANAGEMENT SYSTEM**

(30) Priority: 28.09.2023 CN 202322682633 U
(71) Applicant: Valeo Electrification, 95892 Cergy Pontoise (FR)
(72) Inventor: ZENG, Kun, Jingzhou, Hubei 434000 (CN); QIN, Subing, Jingzhou, Hubei 434000 (CN); LIU, Hao, Jingzhou, Hubei 434000 (CN); HE, Daihua, Jingzhou, Hubei 434000 (CN)
(74) Representative: Valeo Powertrain Systems
(86) International application number: PCT/CN2024/120295
(87) International publication number: WO 2025/067096

(57) **Abstract**

The present disclosure provides a fluid distribution assembly and a thermal management system. The fluid distribution assembly comprises: a sensor; a first distribution plate, the first distribution plate being provided with a pump mounting cavity; and a second distribution plate, which is fixed to a first side of the first distribution plate, to define a flow channel between the first distribution plate and the second distribution plate, the flow channel being in fluid communication with the pump mounting cavity, wherein the second distribution plate is provided with a sensor mounting cavity, the sensor mounting cavity being arranged opposite the pump mounting cavity; the sensor is mounted in the sensor mounting cavity, and is inserted into the flow channel. By means of the above configuration, the present disclosure is able to cause a sensor or a probe thereof to be inserted into a flow channel upstream of a pump mounting cavity, to measure a temperature of a fluid flowing through the pump mounting cavity, and when a first water pump mounted in the pump mounting cavity stops operating, the sensor can further be used to measure a temperature of a fluid flowing through another fluid sub-circuit that communicates with the flow channel upstream of the pump mounting cavity.

## Description

### Technical Field

The present disclosure relates to a fluid distribution assembly and a thermal management system comprising the fluid distribution assembly.

### Background Art

A vehicle thermal management system typically comprises a refrigerant circuit and a cooling liquid circuit, wherein thermal management targets of the cooling liquid circuit comprise a battery assembly, an electric motor assembly, a warm air assembly, etc. In a typical situation, different thermal management targets are respectively connected in series to one water pump to form independent cooling liquid sub-circuits. In order to be able to separately measure performance parameters of the cooling liquid (e.g. temperature, pressure, etc.) in each cooling liquid sub-circuit, it is necessary to respectively mount a sensor in each cooling liquid sub-circuit, which inevitably results in the vehicle thermal management system having a high cost, a greater number of cooling liquid pipelines and components, difficult assembly and greater weight.

Therefore, how to design a fluid distribution assembly and a thermal management system comprising the fluid distribution assembly, such that the system has a lower cost, fewer cooling liquid pipelines and components, simplified assembly, and is more miniaturized and lightweight has become an urgent problem to be solved.

### Summary of the Utility Model

An objective of the present disclosure is to provide a fluid distribution assembly, wherein a pump mounting cavity and a sensor mounting cavity are arranged opposite each other and are coaxial, and interfaces of the two at least partially overlap, such that a sensor or a probe thereof mounted in the sensor mounting cavity may be inserted into an inlet side of the pump mounting cavity, i.e. inserted at an upstream side of the pump mounting cavity, to measure a temperature of fluid flowing through the pump mounting cavity; in this case, if a first water pump mounted in the pump mounting cavity stops moving, the sensor that is inserted at the upstream side of the pump mounting cavity may further be used to sense a temperature of fluid in another fluid sub-circuit that communicates with a flow channel upstream of the pump mounting cavity, avoiding the problems of high cost, a greater number of components, difficult assembly and greater weight due to the requirement in the prior art to respectively provide a sensor in each fluid sub-circuit.

The present disclosure provides a fluid distribution assembly, the fluid distribution assembly comprising: a sensor; a first distribution plate, the first distribution plate being provided with a pump mounting cavity; and a second distribution plate, which is fixed to a first side of the first distribution plate, to define a flow channel between the first distribution plate and the second distribution plate, the flow channel being in fluid communication with the pump mounting cavity, wherein the second distribution plate is provided with a sensor mounting cavity, the sensor mounting cavity being arranged opposite the pump mounting cavity; the sensor is mounted in the sensor mounting cavity, and is inserted into the flow channel.

In one or more embodiments, the sensor mounting cavity is provided with a first interface that is located on the first distribution plate, and the sensor mounting cavity is provided with a second interface that is located on the second distribution plate, the sensor being inserted into the flow channel through the second interface; the first interface is a fluid inlet of the pump mounting cavity, wherein in a direction perpendicular to the second distribution plate, the first interface and the second interface at least partially overlap.

By means of the above configuration of the fluid distribution assembly, the present disclosure is able to cause the sensor or a probe thereof to be inserted into a flow channel upstream of the pump mounting cavity to measure a temperature of fluid flowing through the pump mounting cavity, and when the first water pump mounted in the pump mounting cavity stops operating, the sensor may be used to measure a temperature of fluid in another fluid sub-circuit that communicates with the flow channel upstream of the pump mounting cavity, avoiding the problems of high cost, a greater number of components, difficult assembly and greater weight due to the requirement in the prior art to respectively provide a sensor in each fluid sub-circuit.

In one or more embodiments, the pump mounting cavity and the sensor mounting cavity are coaxial.

In one or more embodiments, the first interface is located at a central position of a bottom wall of the pump mounting cavity; the second interface is located at a central position of a bottom wall of the sensor mounting cavity.

By means of the above arrangement of the pump mounting cavity and the sensor mounting cavity, the present disclosure may facilitate manufacture and mounting, and to a certain degree may reduce fluid flow resistance due to insertion of the sensor.

In one or more embodiments, the first interface of the pump mounting cavity is located at an end part of the flow channel.

By means of the above arrangement of the pump mounting cavity first interface, a flow direction of fluid in the flow channel at the first interface is adjusted to a direction that is perpendicular to the fluid distribution assembly, which causes a flow direction of fluid entering the pump mounting cavity to be parallel to an insertion direction of the sensor, further reducing fluid flow resistance caused by insertion of the sensor.

In one or more embodiments, a limiting part is provided in the pump mounting cavity, the limiting part being used for forming a limiting fit with the sensor.

By means of the above arrangement of the limiting part, the present disclosure may define a position of the sensor or the probe thereof inserted in the flow channel.

In one or more embodiments, the limiting part comprises a fixing clamping groove.

By means of providing a fixing clamping groove, the present disclosure enables the sensor to engage with and fix to the interior of the sensor mounting cavity by means of a component such as a snap ring.

In one or more embodiments, a first port that communicates with the flow channel is further provided on the second distribution plate, the first port being arranged adjacent to the sensor mounting cavity; the first port is an inlet for fluid to enter into the flow channel.

By means of the above arrangement of the first port, the present disclosure may use the sensor to accurately measure/sense a temperature of fluid in another fluid sub-circuit that communicates with the flow channel when the first water pump mounted in the pump mounting cavity stops operating.

In one or more embodiments, a flow channel groove is provided on the first distribution plate, and the second distribution plate is a cover plate.

By means of the above arrangement of the first distribution plate and the second distribution plate, the present disclosure simplifies the structure thereof, and facilitates manufacture and mounting of the fluid distribution assembly.

The present disclosure further provides a thermal management system, the thermal management system comprising the aforementioned fluid distribution assembly.

In one or more embodiments, the thermal management system comprises: a first cooling liquid pipeline, the first cooling liquid pipeline being sequentially provided with the sensor of the fluid distribution assembly, a first water pump and an electric motor assembly in a flow direction of fluid, wherein an upstream side of the sensor communicates with a first connection point, and a downstream side of the electric motor assembly communicates with a second connection point, a first port in the fluid distribution assembly that is arranged adjacent to the sensor mounting cavity being arranged at the first connection point; a second cooling liquid pipeline, the second cooling liquid pipeline being sequentially provided with a second water pump and a warm air core in a flow direction of fluid, wherein an upstream side of the second water pump communicates with the first connection point, and a downstream side of the warm air core communicates with the second connection point; a third cooling liquid pipeline, two ends thereof respectively communicating with the first connection point and the second connection point.

By means of the above configuration of the thermal management system of the present disclosure, i.e. the electric motor assembly and the warm air core being connected in parallel in different cooling liquid pipelines, the sensor is arranged at an inlet end of the first water pump arranged in the first cooling liquid pipeline (i.e. arranged upstream of the first water pump), while also communicating with the second cooling liquid pipeline, and thus the sensor is able to measure a temperature of cooling liquid flowing into the first cooling liquid pipeline and the second cooling liquid pipeline. Moreover, when the first water pump in the first cooling liquid pipeline stops moving, the sensor is still able to measure a temperature of cooling liquid flowing into the second cooling liquid pipeline, and such an arrangement reduces the cost of the thermal management system, reduces the number of sensors, simplifies assembly and reduces weight.

In one or more embodiments, the first connection point and the second connection point comprise a three-way structure.

In one or more embodiments, a low-temperature radiator is provided on the third cooling liquid pipeline, wherein an upstream side of the low-temperature radiator communicates with the second connection point, and a downstream side of the low-temperature radiator communicates with the first connection point.

In one or more embodiments, the first water pump is fixedly mounted in the pump mounting cavity of the fluid distribution assembly.

### Brief Description of the Drawings

Fig. 1 shows a three-dimensional drawing of a fluid distribution assembly according to an embodiment of the present disclosure, wherein a sensor is omitted;
Fig. 2 shows a three-dimensional drawing of a first distribution plate according to an embodiment of the present disclosure;
Fig. 3 shows a three-dimensional drawing of a first distribution plate according to an embodiment of the present disclosure, viewed from another angle of view;
Fig. 4 shows a three-dimensional drawing of a second distribution plate according to an embodiment of the present disclosure;
Fig. 5 shows a three-dimensional drawing of a second distribution plate according to an embodiment of the present disclosure, viewed from another angle of view;
Fig. 6 shows a cutaway three-dimensional drawing of a fluid distribution assembly according to an embodiment of the present disclosure;
Fig. 7 shows a cutaway view of a fluid distribution assembly according to an embodiment of the present disclosure;
Fig. 8 shows a partially enlarged view of a fluid distribution assembly once fitted with a first water pump according to an embodiment of the present disclosure;
Fig. 9 shows a schematic diagram of connections of a thermal management system according to an embodiment of the present disclosure;
Fig. 10 shows a schematic diagram of a first operating mode of a thermal management system according to an embodiment of the present disclosure;
Fig. 11 shows a schematic diagram of a second operating mode of a thermal management system according to an embodiment of the present disclosure;
Fig. 12 shows a schematic diagram of a third operating mode of a thermal management system according to an embodiment of the present disclosure;
Fig. 13 shows a schematic diagram of a fourth operating mode of a thermal management system according to an embodiment of the present disclosure;
Fig. 14 shows a schematic diagram of a fifth operating mode of a thermal management system according to an embodiment of the present disclosure;
Fig. 15 shows a schematic diagram of a sixth operating mode of a thermal management system according to an embodiment of the present disclosure.

### Detailed Description of the Invention

Ways of implementing the present disclosure are described below through specific embodiments; based on the content disclosed herein, those skilled in the art will be able to easily understand other advantages and effects of the present disclosure.

It should be noted that all of the structures, proportions and sizes, etc., depicted in the drawings attached hereto are merely intended to complement the content disclosed herein, being offered for a person skilled in the art to understand and peruse, and are not intended to define limiting conditions for implementation of the present disclosure, and therefore do not have any substantive technical meaning. Any structural modifications, changes to proportional relationships or adjustments to size, which have no impact on the effects and objectives achievable by the present disclosure, shall still fall within the scope of coverage of the technical content disclosed herein. Moreover, words such as "up" and "a" cited herein are merely intended to clarify the description, not to limit the scope of implementation of the present disclosure; changes or adjustments to relationships which do not substantively alter the technical content shall also be regarded as being within the scope of implementation of the present disclosure.

To provide a clearer understanding of the present disclosure, embodiments of the present disclosure are described in specific terms below in conjunction with the drawings.

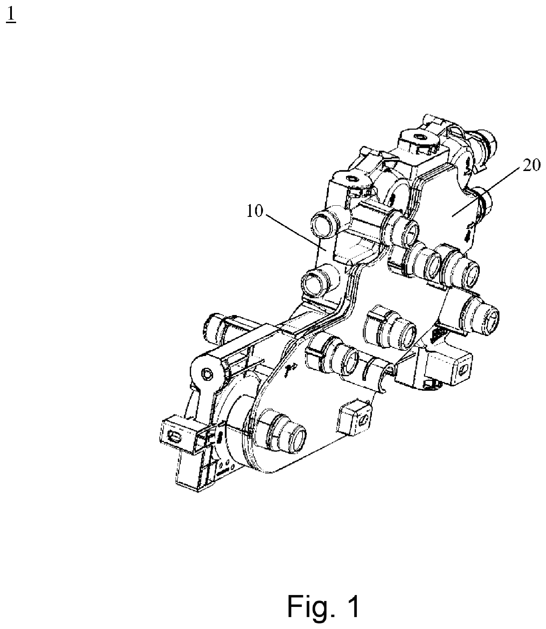

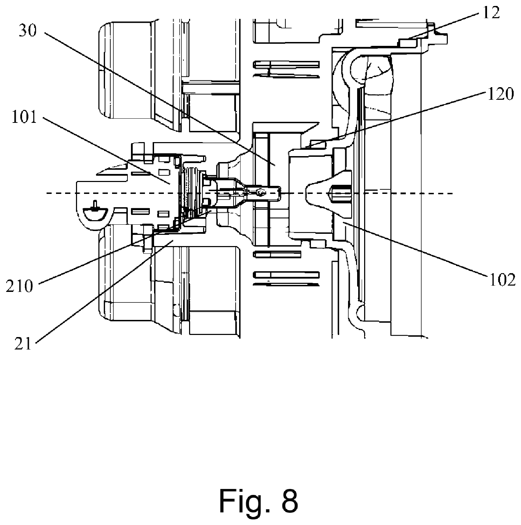

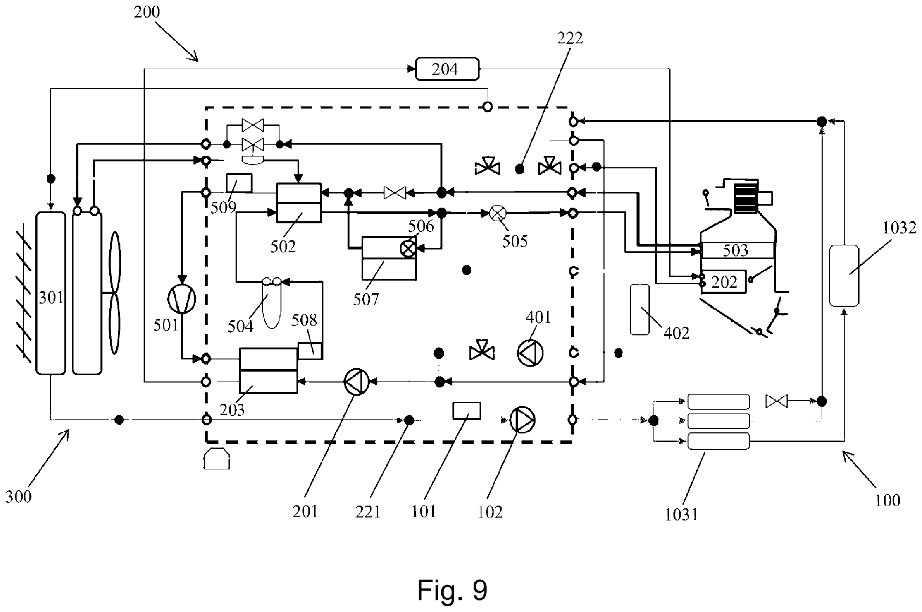

The present disclosure provides a fluid distribution assembly 1; as shown in Fig. 1, the fluid distribution assembly 1 comprises a first distribution plate 10, a second distribution plate 20 that is fixed to a first side of the first distribution plate 10, and a sensor 101 that is mounted on the second distribution plate 20, and the sensor 101 may be a temperature sensor, but the present disclosure is not limited to this; for example, the sensor 101 may also be another sensor for measuring another fluid performance parameter. It must be explained that to clearly show the structure of the fluid distribution assembly 1, the sensor 101 is omitted in the fluid distribution assembly 1 shown in Figs. 1 - 7, and the sensor 101 is only shown in the partially enlarged view of the fluid distribution assembly 1 shown in Fig. 8 and the thermal management system of Figs. 9 - 15.

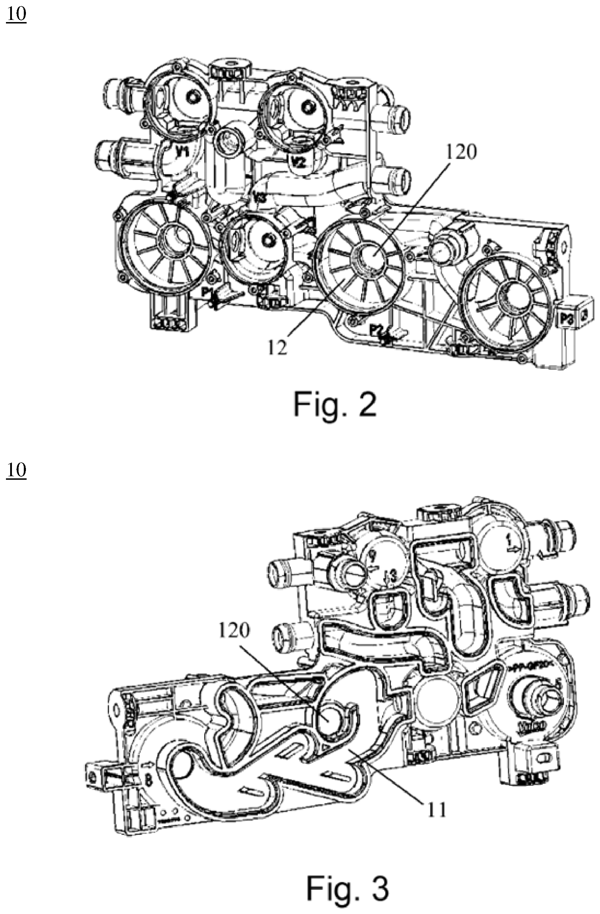

Referring to Figs. 2 and 3, the first distribution plate 10 is provided at an outer side thereof that is remote from the second distribution plate 20 with a pump mounting cavity 12, used for mounting a first water pump 102 (as shown in Fig. 8). The first distribution plate 10 is provided at an inner side that is near the second distribution plate 20 with a flow channel groove 11, to fit to the second distribution plate 20 to form a flow channel 30, the pump mounting cavity 12 being in fluid communication with the flow channel 30.

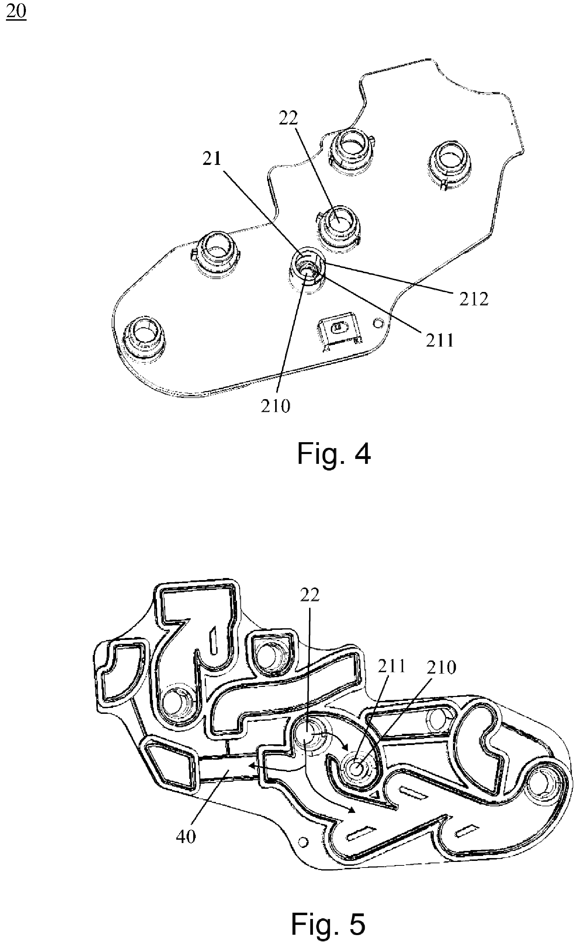

Referring to Figs. 4 and 5, the second distribution plate 20 may be a cover plate, to fit to the flow channel groove 11 (also called a first flow channel groove 11) on the first distribution plate 10 to form the flow channel 30, and the structure of the second distribution plate 20 is simple, which facilitates manufacture and mounting of the fluid distribution assembly. Of course, the present disclosure is not limited to this; for example, a second flow channel groove may also be provided on the second distribution plate 20, the flow channel 30 of the fluid distribution assembly 1 being formed by means of joining a second flow channel groove and the first flow channel groove 11; that is, it suffices that when the second distribution plate 20 is fixed to the first side of the first distribution plate 10, the flow channel 30 may be defined between the two. The second distribution plate 20 is provided at an outer side that is remote from the first distribution plate 10 with a sensor mounting cavity 21, the sensor mounting cavity 21 being arranged opposite the pump mounting cavity 12; the sensor 101 may be mounted in the sensor mounting cavity 21, and a probe of the sensor 101 may be inserted into the flow channel 30 defined by the first distribution plate 10 and the second distribution plate 20 (as shown in Fig. 8), to measure a temperature of fluid in the flow channel 30 flowing through the pump mounting cavity 12, and preferably, measures a temperature of upstream fluid flowing through the pump mounting cavity 12.

Specifically, as shown in Figs. 2 and 3, the pump mounting cavity 12 may be substantially cylindrical. The pump mounting cavity 12 is provided with a first interface 120, the first interface 120 acting as a fluid inlet of the pump mounting cavity 12. The first interface 120 is located on the first distribution plate 10 and communicates with the flow channel groove 11 of the inner side of the first distribution plate 10, so that fluid in the flow channel groove 30 may flow into the pump mounting cavity 12. In addition, the pump mounting cavity 12 is further provided with a fluid outlet (not shown) that communicates with the flow channel 30, for example, being located on a side wall of the pump mounting cavity 12, enabling the first water pump 102 mounted in the pump mounting cavity 12 to provide a driving force to fluid in the flow channel 30, forming a fluid circuit.

As shown in Figs. 4, 5 and 8, the sensor mounting cavity 21 may also be substantially cylindrical. The sensor mounting cavity 21 is provided with a second interface 210 that is located on the second distribution plate 20 and may communicate with the flow channel 30, such that the sensor 101, preferably a probe of the sensor 101, may be inserted into the flow channel 30 through this second interface 210. In a direction perpendicular to the second distribution plate 20, the first interface 120 and the second interface 210 at least partially overlap, such that the sensor 101 or the probe thereof may be inserted into an inlet side of the pump mounting cavity 12, i.e. inserted at the upstream side of the pump mounting cavity 12, to measure a temperature of fluid flowing through the pump mounting cavity 12; in this way, when the first water pump 102 mounted in the pump mounting cavity 12 stops moving, the sensor 101 that is inserted at the upstream side of the pump mounting cavity 12 may further be used to sense a temperature of fluid in another fluid sub-circuit that communicates with the flow channel 30 (preferably located upstream of the pump mounting cavity 12 in the flow channel 30), avoiding the problems of high cost, a greater number of components, difficult assembly and greater weight due to the requirement in the prior art to respectively provide a sensor in each fluid sub-circuit.

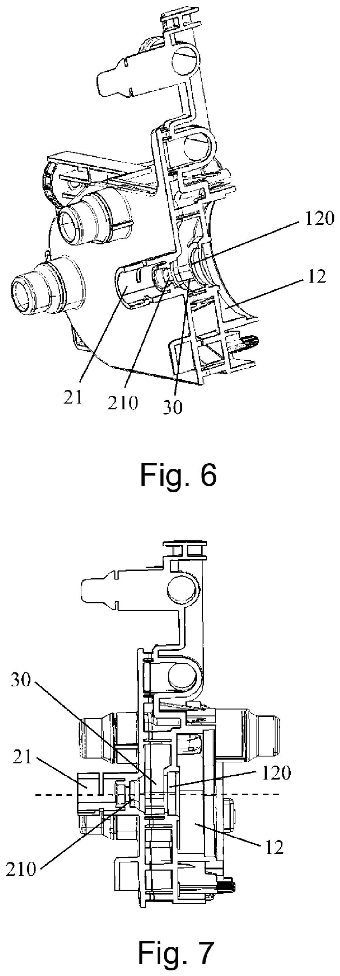

Preferably, as shown in Figs. 6, 7 and 8, the pump mounting cavity 12 and the sensor mounting cavity 21 may be substantially coaxial, and the first interface 120 is located at a central position of a bottom wall of the pump mounting cavity 12, and the second interface 210 is located at a central position of a bottom wall of the sensor mounting cavity 21, which may facilitate manufacture, and to a certain degree may reduce fluid flow resistance caused by insertion of the sensor 101.

More preferably, the first interface 120 of the pump mounting cavity 12 is arranged at an end part of the flow channel 30, such that a flow direction of fluid in the flow channel 30 at the end part is adjusted to a direction that is perpendicular to the fluid distribution assembly 1, which causes a flow direction of fluid entering the pump mounting cavity 12 to be parallel to an insertion direction of the sensor 101, further reducing fluid flow resistance caused by insertion of the sensor 101.

Further referring to Figs. 4 and 5, in an embodiment, a substantially annular limiting part 211 may be provided inside the sensor mounting cavity 21, used for forming a limiting fit with the sensor 101, to define the position of the sensor 101 or a probe thereof inserted into the flow channel 30. Preferably, the sensor 101 may be sealingly connected to the limiting part 211, to prevent fluid from leaking through the sensor mounting cavity 21. In an embodiment, a limiting part 211 acts as/is arranged on the bottom wall of the sensor mounting cavity 21, and the second interface 210 is located at the center of the limiting part 211, but the present disclosure is not limited to this; for example, the limiting part 211 may also be arranged on a side wall of the sensor mounting cavity 21, as long as the limiting part is able to form a limiting fit with the sensor 101. In addition, the present disclosure is also not limited to the sensor 101 being sealingly connected to the limiting part 211; for example, the sensor 101 may also be sealingly connected to a side wall of the sensor mounting cavity 21, as long as fluid can be prevented from leaking.

Further referring to Fig. 4, a fixing clamping groove 212 may be further provided on the side wall of the sensor mounting cavity 21, enabling the sensor 101 to engage with and fix to the interior of the sensor mounting cavity 21 by means of a component such as a snap ring. Of course, the present disclosure is not limited to this; for example, the fixing clamping groove 212 may also be arranged on the limiting part 211, as long as the sensor 101 can be fixed to the interior of the sensor mounting cavity 21.

Further referring to Figs. 4 and 5, a first port 22 that communicates with the flow channel 30 may be further arranged on the second distribution plate 20; this first port 22 may act as an inlet for fluid entering the flow channel 30. Preferably, the first port 22 may be arranged adjacent to the sensor mounting cavity 21; in this way, when the first water pump 102 mounted in the pump mounting cavity 12 stops moving, the sensor 101 may accurately measure/sense a temperature of fluid in another fluid sub-circuit of the flow channel 30. In particular, as shown in Fig. 5, in the present embodiment, fluid entering the flow channel 30 from the first port 22 divides into three paths due to the design of the flow channel: the first path directly flows to a branch of the sensor mounting cavity 21 arranged in the flow channel 30 (as shown by the top arrow in Fig. 5); the second path flows to a flow channel 40 of another fluid sub-circuit that communicates with the flow channel 30 (as shown by the bottom-left arrow in Fig. 5); and the third path flows to another branch of the flow channel 30 (as shown by the bottom-right arrow in Fig. 5). In this way, when the first water pump 102 mounted in the pump mounting cavity 12 operates, fluid will not form a circuit in the flow channel 30 (preferably the pump mounting cavity 12 that communicates with the flow channel 30), at which time the sensor 101 inserted at the upstream side of the pump mounting cavity 12 is also unable to measure a temperature of a fluid circuit flowing through the pump mounting cavity 12, but since the flow channel 30 that is upstream of the pump mounting cavity 12 communicates with the flow channel 40 of the other fluid sub-circuit, such that fluid entering from the first port 22 is able to flow via a portion of the flow channel 30 into the flow channel 40 of the other fluid sub-circuit, and the sensor mounting cavity 21 is adjacent to the first port 22, the sensor 101 that is inserted at the upstream side of the pump mounting cavity 12 is enabled to measure/sense a temperature of fluid of this other fluid sub-circuit (i.e. the fluid sub-circuit flowing through the flow channel 40), which allows an additional sensor arranged in this other fluid sub-circuit to be dispensed with, saving on costs, reducing the number of components, simplifying assembly, and allowing for further miniaturization and weight reduction.

Of course, when the first water pump mounted in the pump mounting cavity 12 operates normally, fluid entering from the first port 22 is able to form a fluid circuit in the flow channel 30 (preferably the pump mounting cavity 12 that communicates with the flow channel 30), while the flow channel 30 upstream of the pump mounting cavity 12 also forms a fluid circuit with the flow channel 40 of the other fluid sub-circuit, at which time the sensor 101 that is inserted at the upstream side of the pump mounting cavity 12 is able to measure a temperature of fluid flowing into the pump mounting cavity 12 and a temperature of fluid flowing into the flow channel 40 of the other fluid sub-circuit.

Although the present disclosure describes the limiting part 211 as annular, the present disclosure is not limited to this; for example, the limiting part 211 may also be another shape, as long as the insertion position of the sensor 101 can be defined thereby.

The present disclosure further provides a thermal management system comprising the fluid distribution assembly described above, and various embodiments of the thermal management system are specifically explained below in conjunction with the drawings.

The connection relationships between components in the thermal management system are shown in Fig. 9. As shown, the thermal management system comprises a first cooling liquid pipeline 100, a second cooling liquid pipeline 200 and a third cooling liquid pipeline 300. A cooling liquid, such as a liquid mixture of water and ethanol, circulates in the first cooling liquid pipeline 100, the second cooling liquid pipeline 200 and the third cooling liquid pipeline 300.

The first cooling liquid pipeline 100 (also called an electric motor cooling liquid sub-circuit) is sequentially provided with the sensor 101 of the fluid distribution assembly 1 described above, a first water pump 102 and an electric motor assembly 103 in a flow direction of fluid, wherein the electric motor assembly 103 comprises an electronic control module 1031 and an electric motor 1032, etc. The sensor 101 is used for sensing a temperature of cooling liquid flowing into the first water pump 102. The first water pump 102 is used for pumping cooling liquid to flow through the electric motor assembly 103. An upstream side of the sensor 101 communicates with a first connection point 221. A downstream side of the electric motor assembly 103 communicates with a second connection point 222. The first port 22 arranged adjacent to the sensor mounting cavity 21 in the fluid distribution assembly 1 shown in Fig. 5 is arranged at the first connection point 221 of the thermal management system. The first water pump 102 is fixedly mounted in the pump mounting cavity 12 of the fluid distribution assembly 1 shown in Fig. 1. The first cooling liquid pipeline 100 of the thermal management system comprises the flow channel 30 of the fluid distribution assembly 1.

The second cooling liquid pipeline 200 (also called a warm air core cooling liquid sub-circuit) is sequentially provided with a second water pump 201 and a warm air core 202 in a flow direction of fluid. The second water pump 201 is used for pumping cooling liquid to the warm air core 202, and an upstream side of the second water pump 201 communicates with the first connection point 221. The warm air core 202 is used for heating a cabin of a vehicle, and a downstream side of the warm air core 202 communicates with the second connection point 222. In the present embodiment, a first heat exchanger 203 and a high-voltage liquid heater 204 may be further sequentially provided between the second water pump 201 and the warm air core 202. The first heat exchanger 203 may be a water-cooled condenser, which is provided with a first flow channel and a second flow channel that respectively circulate refrigerant and cooling liquid. The high-voltage liquid heater 204 is used for heating cooling liquid flowing therethrough. When it is necessary to heat the vehicle cabin, if a temperature of warm air blown out by the warm air core 202 fails to reach a temperature set by a user, the high-voltage liquid heater 204 can be switched on to heat the cooling liquid, to increase the temperature of the cooling liquid flowing to the warm air core 202, thus helping to increase the temperature of the warm air, and promoting a rise in temperature of the vehicle cabin. The second liquid cooling pipeline 200 in the thermal management system comprises the flow channel 40 of another fluid sub-circuit that communicates with the flow channel 30 upstream of the pump mounting cavity 12 in the fluid distribution assembly 1.

Two ends of the third cooling liquid pipeline 300 respectively communicate with the first connection point 221 and the second connection point 222. The first connection point 221 and the second connection point 222 may comprise a three-way structure or another communication structure. In the present embodiment, a radiator 301 may be provided on the third cooling liquid pipeline 300, for example a low-temperature radiator 301, used for transferring heat to the outside or absorbing heat from the outside. The upstream side of the low-temperature radiator 301 communicates with the second connection point 222, and the downstream side of the low-temperature radiator 301 communicates with the first connection point 221.

It can be seen from the above configuration that the electric motor assembly 103 and the warm air core 202 in the thermal management system of the present disclosure are connected in parallel in different cooling liquid pipelines 100 and 200, and the sensor 101 is arranged at an inlet end of the first water pump 102 arranged in the first cooling liquid pipeline 100 (i.e. arranged upstream of the first water pump 102), while also communicating with the second cooling liquid pipeline 200, and thus the sensor 101 is able to measure a temperature of cooling liquid flowing into the first cooling liquid pipeline 100 and the second cooling liquid pipeline 200. When the first water pump 102 in the first cooling liquid pipeline 100 stops operating, the sensor 101 is able to measure a temperature of cooling liquid flowing into the second cooling liquid pipeline 200. That is, the first cooling liquid pipeline 100 and the second cooling liquid pipeline 200 of the thermal management system of the present disclosure may share a sensor 101 to measure a cooling liquid temperature, reducing the cost of the thermal management system, reducing the number of sensors provided, simplifying assembly and further reducing weight.

Of course, the thermal management system of the present disclosure may further comprise a fourth cooling liquid pipeline 400, such as a battery cooling liquid pipeline, etc. As shown in Fig. 9, the fourth cooling liquid pipeline 400 is provided in a flow direction of fluid with a third water pump 401, a second heat exchanger 507 and a heat-emitting battery assembly 402, wherein the second heat exchanger 507 is a cooler for example. In addition, the fourth cooling liquid pipeline 400 may further be provided with a sensor (not shown), used for measuring a temperature of cooling liquid flowing therethrough, and may be arranged on a pipeline of an input end and an output end of the battery assembly 402. The fourth cooling liquid pipeline 400 may communicate with the first connection point 221 and the second connection point 222 by means of multiple communication structures, to form a cooling liquid circuit with the first cooling liquid pipeline 100, the second cooling liquid pipeline 200 and/or the third cooling liquid pipeline 300.

As well as comprising the cooling liquid circuit, the thermal management system further comprises a refrigerant circuit. Refrigerant, such as Freon, circulates in the refrigerant circuit. As shown in Fig. 9, the refrigerant circuit may be provided with a compressor 501, which can compress the refrigerant to form high-temperature high-pressure refrigerant. The refrigerant circuit is also provided with a first heat exchanger 203 (the first heat exchanger 203 being a water-cooled condenser in the second cooling liquid pipeline 200), an intermediate heat exchanger (IHX) 502 and an evaporator 503; the high-temperature high-pressure refrigerant output by the compressor 501 undergoes heat exchange at the first heat exchanger 203 to obtain medium-temperature refrigerant, and this medium-temperature refrigerant undergoes heat exchange at the intermediate heat exchanger 502 to obtain low-temperature refrigerant, and this low-temperature refrigerant enters the evaporator 503 to absorb heat through evaporation, and refrigerant thus obtained flows back to the compressor 501 via the intermediate heat exchanger 502. A dryer 504, for filtering impurities in the refrigerant and drying the environment, may be provided between the first heat exchanger 203 and the intermediate heat exchanger 502. A first valve 505, for example an expansion valve, may further be provided between the intermediate heat exchanger 502 and the evaporator 503. The refrigerant circuit may also be provided with a second valve 506, the function of the second valve 506 being to cause expansion of the refrigerant by throttling, and the function of a second heat exchanger 507 is to allow refrigerant and cooling liquid flowing therethrough to undergo heat exchange. Specifically, when it is necessary to cool a battery assembly 402, refrigerant is throttled by the second valve 506 and expands, then enters the second heat exchanger 507 to absorb heat through evaporation, thereby reducing a temperature of cooling liquid flowing through the second heat exchanger 507, and the cooled cooling liquid then flows through the battery assembly 402, to cool the battery assembly 402. Low-temperature refrigerant obtained by heat exchange in the intermediate heat exchanger 502 can flow to the second valve 506, be throttled in the second valve 506 to expand, and absorb heat through evaporation in the second heat exchanger 507. The second heat exchanger 507 is provided with a first flow channel and a second flow channel in which refrigerant and cooling liquid circulate, respectively, and the refrigerant then flows back to the intermediate heat exchanger 502, and flows to the compressor 501. The refrigerant circuit may also be provided with various sensors 508, 509 (the present disclosure is described using only these two sensors, but is not limited to this), which are used for measuring parameters such as temperature or pressure of the refrigerant. For example, the sensor 508 may be arranged between the first heat exchanger 203 and the dryer 504. The sensor 509 may be arranged on a pipeline of an input end of the compressor 1.

The thermal management system of the present disclosure comprises multiple operating modes; the different operating modes of the thermal management system are described below in conjunction with the drawings.

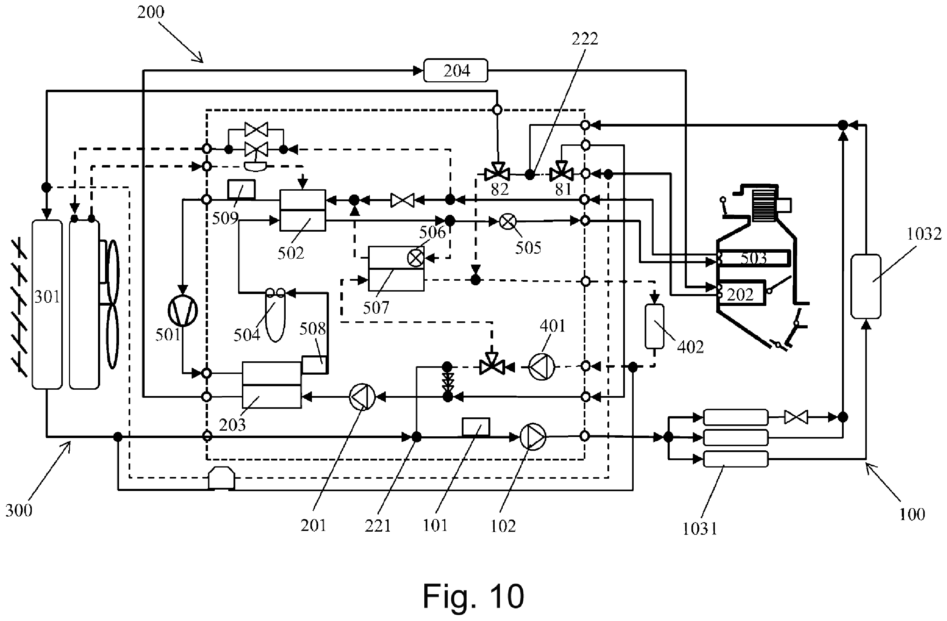

Fig. 10 shows a first operating mode of the thermal management system; as shown, high-temperature high-pressure refrigerant that is discharged by the compressor 501 enters the first heat exchanger 203 to undergo heat exchange, the refrigerant being cooled into medium-temperature refrigerant and releasing heat, and the medium-temperature refrigerant enters a first passage of the intermediate heat exchanger 502 after passing through the dryer 504, and is converted into low-temperature refrigerant after being expanded by throttling by the first valve 505, the low-temperature refrigerant entering the evaporator 503 and evaporating, and absorbing heat from an airflow flowing through the evaporator 503, the airflow being cooled and conveyed into a vehicle cabin, thus cooling or dehumidifying the vehicle cabin. The refrigerant that flows out from the evaporator 503 flows back to the compressor 501 via the second passage of the intermediate heat exchanger 502.

The cooling liquid that flows out from the second water pump 201 enters the first heat exchanger 203, and absorbs heat released by the refrigerant, and the heated cooling liquid enters the warm air core 202 after passing through the high-voltage liquid heater 204, which enables the warm air core 202 to heat air that has been cooled by the evaporator 503, to heat the vehicle cabin. Cooling liquid that leaves the warm air core 202 flows back to the second water pump 201 under the control of a first communication structure 81.

Cooling liquid that flows out from the first water pump 102 reaches the second connection point 222 after sequentially flowing through the electronic control module 1031 and the electric motor 1032, and flows to the radiator 301 under the control of the first communication structure 81 and a second communication structure 82, cooling liquid that flows out from the radiator 301 dividing into two paths after flowing to the first connection point 221, the first path flowing back to the first water pump 102 via the sensor 101, and the other path being able to converge with cooling liquid that flows out from the warm air core 202 and flow into the second water pump 201.

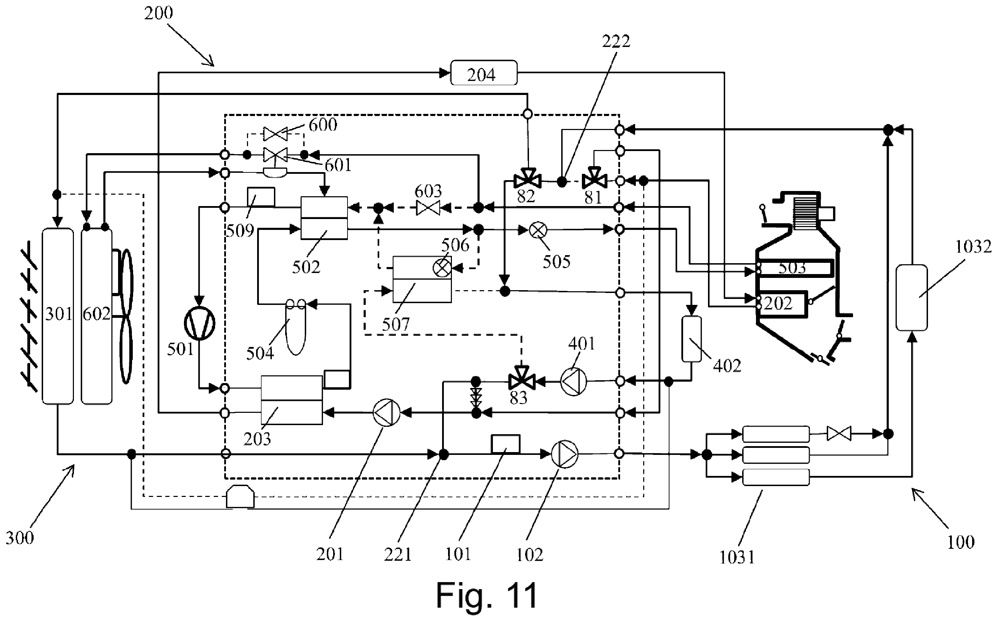

Fig. 11 shows a second operating mode of the thermal management system; as shown, compared to the first operating mode, a stop valve 600 is in a closed state, and an expansion valve 601 is in an open state. A refrigerant stop valve 603 is in a closed state, such that refrigerant that flows out from the evaporator 503 does not flow through the refrigerant stop valve 603, and after flowing through the expansion valve 601 and being throttled, flows to an external heat exchanger 602, and refrigerant that leaves the external heat exchanger 602 flows back to the compressor 501 after passing through the intermediate heat exchanger 502; the expansion valve 601, for example, is a thermostatic expansion valve with a stop function. In this second operating mode, the external heat exchanger 602 acts as an evaporator, absorbing heat from an external airflow. In addition, under the control of the first communication structure 81 and the second communication structure 82, a portion of cooling liquid that leaves the electric motor assembly 103 flows to the radiator 301, and another portion flows to the battery assembly 402 and the third water pump 401, wherein the battery assembly 402 and the cooling liquid perform heat exchange, and cooling liquid that leaves the third water pump 401 communicates with the first connection point 221 and the second water pump 201 under the control of the third communication structure 83.

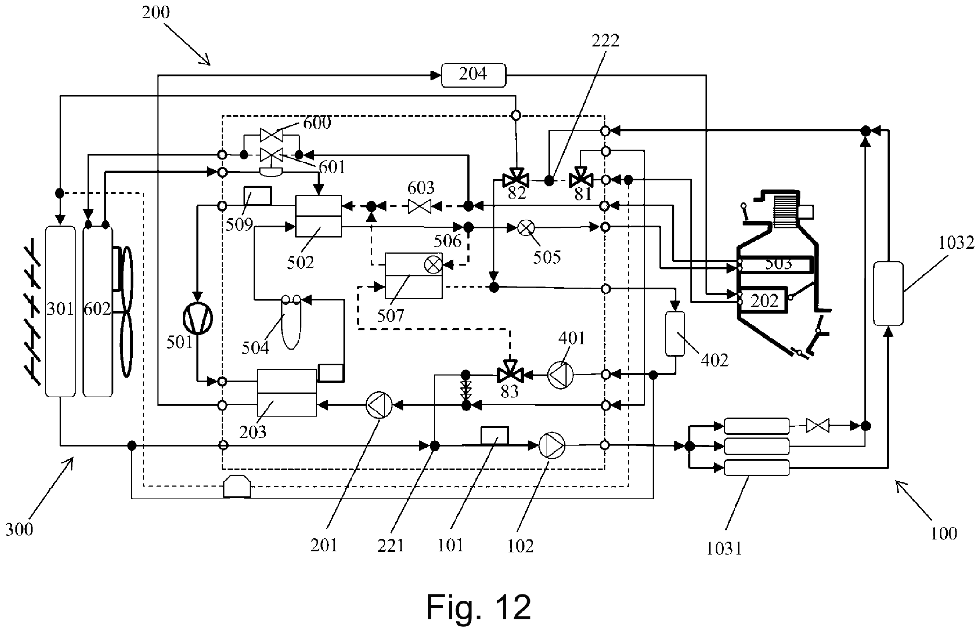

Fig. 12 shows a third operating mode of the thermal management system; as shown, compared to the second operating mode, the stop valve 600 is in an open state, and the expansion valve 601 is in a closed state. The external heat exchanger 602 acts as an evaporator in this third operating mode.

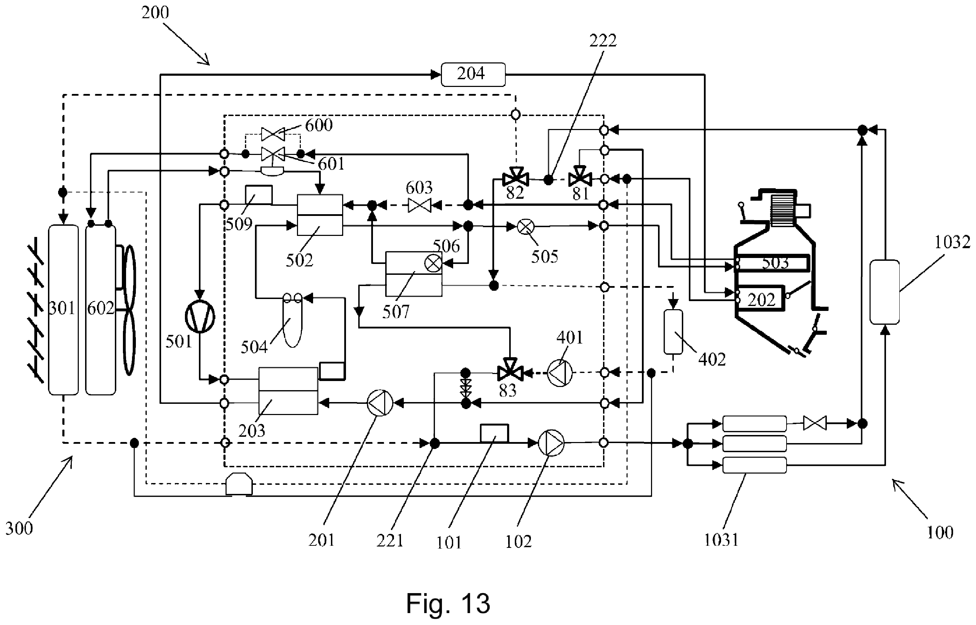

Fig. 13 shows a fourth operating mode of the thermal management system; as shown, compared to the second operating mode, the second valve 506 is in an open state, such that a portion of refrigerant that leaves the intermediate heat exchanger 502 enters the first passage of the second heat exchanger 507 and evaporates, absorbing heat, thereby cooling the cooling liquid that flows through the second passage of the second heat exchanger 507. The refrigerant that leaves the first passage of the second heat exchanger 507 continues to flow to the intermediate heat exchanger 502 and flows back to the compressor 501. In addition, under the control of the first communication structure 81 and the second communication structure 82, cooling liquid that leaves the electric motor assembly 103 does not then flow to the radiator 301, but rather flows to the second passage of the second heat exchanger 507, and cooling liquid in the second passage has heat thereof absorbed and is cooled, and flows to the first connection point 221 and the second water pump 201 under the control of the third communication structure 83. In this fourth operating mode, cooling liquid does not flow in the battery assembly 402 and the third water pump 401.

When the thermal management system is in the first operating mode, the second operating mode, the third operating mode or the fourth operating mode, the first water pump 102 and the second water pump 201 both operate normally; the sensor 101 is arranged at the inlet end of the first water pump 102 (i.e. upstream), and thus is able to measure a temperature of the first cooling liquid pipeline 100 that flows through the first water pump 102 (i.e. the electric motor cooling liquid sub-circuit). Also the sensor 101 is arranged adjacent to the first connection point 221, and thus a temperature of cooling liquid of the second cooling liquid pipeline 200 that communicates with the first connection point 221 (i.e. a warm air core cooling liquid sub-circuit) may also be measured by the sensor 101. Thus it can be seen that, when the thermal management system is in the first to fourth operating modes, the first cooling liquid pipeline 100 and the second cooling liquid pipeline 200 may share a sensor 101 to measure a cooling liquid parameter, reducing the cost of the thermal management system, and reducing the number of sensors provided.

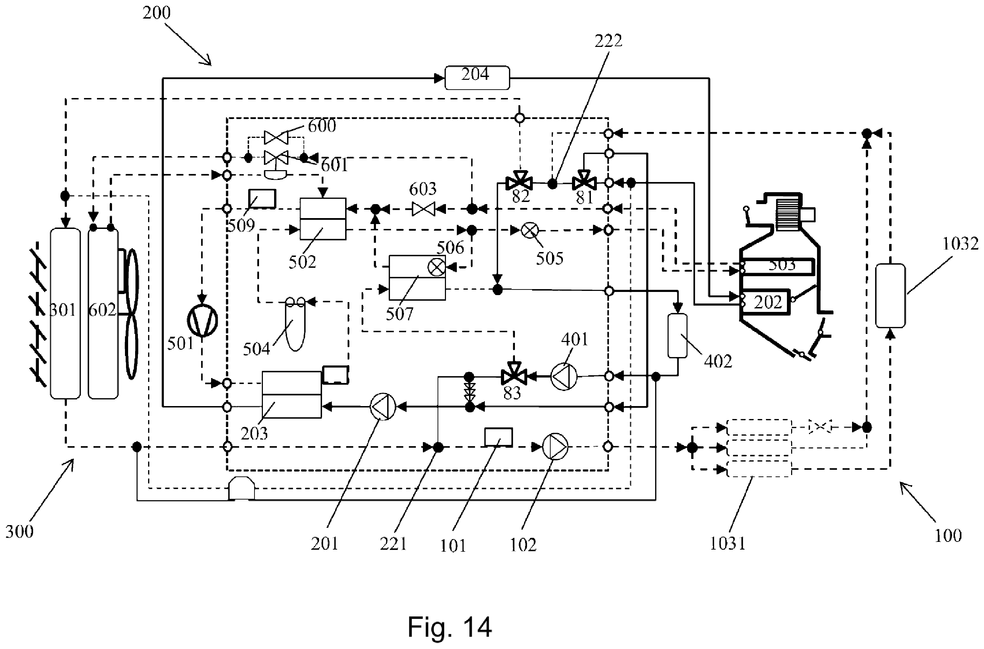

Fig. 14 shows a fifth operating mode of the thermal management system; as shown, in this operating mode, refrigerant does not flow in the refrigerant circuit. The first water pump 102 stops operating, and the second water pump 201 operates normally. Cooling liquid that flows out from the second water pump 201 flows through the first heat exchanger 203 and the high-voltage liquid heater 204; the cooling liquid is heated in the high-voltage liquid heater 204, and flows to the warm air core 202, to heat an airflow that flows through the warm air core 202. Cooling liquid that leaves the warm air core 202 divides into two paths under the control of the first communication structure 81, one path flowing to the second water pump 201, and the other path reaching the second communication structure 82 via the second connection point 222, and flowing to the battery assembly 402 and the third water pump 401 under the control of the second communication structure 82, and reaching a third communication structure 83, and under the control thereof, cooling liquid that has left the battery assembly 402 converging with cooling liquid that has left the warm air core 202, and then flowing back to the second water pump 201.

When the thermal management system is in the fifth operating mode, the first water pump 102 stops operating, and the second water pump 201 operates normally; the sensor 101 is arranged at the inlet end of the first water pump 102 (i.e. upstream), and is arranged adjacent to the first connection point 221, and thus the sensor 101 is able to measure a temperature of cooling liquid of the second cooling liquid pipeline 200 that communicates with the second connection point 221 (i.e. the warm air core cooling liquid sub-circuit). Thus it can be seen that, when the thermal management system is in the fifth operating mode, the sensor 101 arranged in the first cooling liquid pipeline 100 is able to measure a parameter of cooling liquid in the second cooling liquid pipeline 200, avoiding problems such as high cost and a greater number of components due to the requirement in the prior art to connect sensors in series in each cooling liquid sub-circuit.

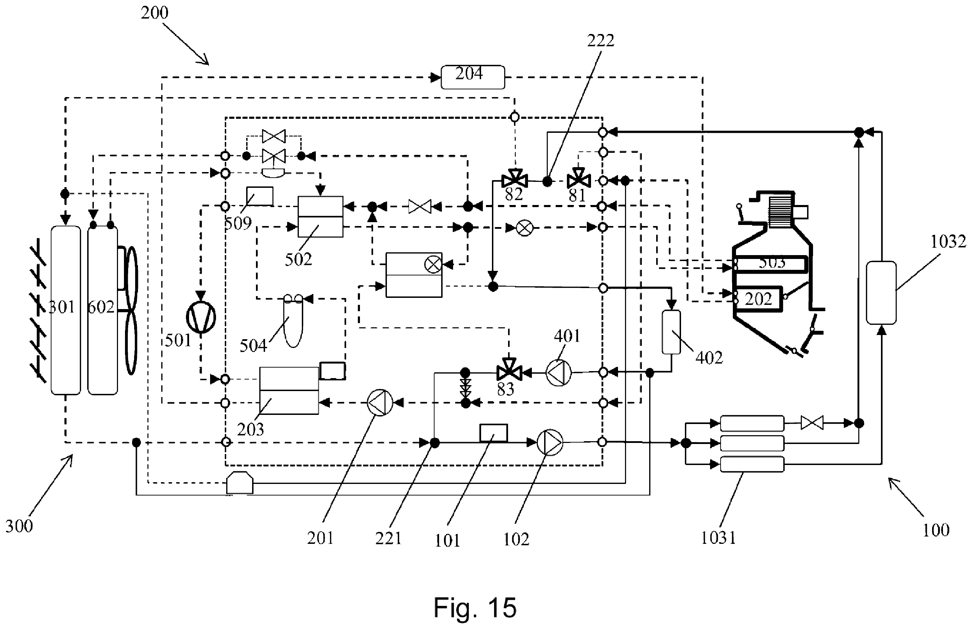

Fig. 15 shows a sixth operating mode of the thermal management system; as shown, in this operating mode, refrigerant does not flow in the refrigerant circuit. The first water pump 102 operates normally, and the second water pump 201 stops operating. Cooling liquid that flows out from the first water pump 102 reaches the second connection point 222 after sequentially flowing through the electronic control module 1031 and the electric motor 1032; under the control of the first communication structure 81 and the second communication structure 82, the cooling liquid flows to the battery assembly 402, and cooling liquid that leaves the battery assembly 402 reaches the first connection point 211 via the third water pump 401 and the third communication structure 83, and flows back to the first water pump 102.

When the thermal management system is in the sixth operating mode, the second water pump 201 stops operating, and the first water pump 102 operates normally; the sensor 101 that is arranged at the inlet end of the first water pump 102 (i.e. upstream) is able to measure a temperature of cooling liquid of the first cooling liquid pipeline 100 that flows through the first water pump 102 (i.e. the electric motor cooling liquid sub-circuit).

Of course, the thermal management system of the present disclosure may further comprise other operating modes, not listed here.

The present disclosure provides a fluid distribution assembly and a thermal management system comprising the fluid distribution assembly. In the fluid distribution assembly, a pump mounting cavity and a sensor mounting cavity are arranged opposite each other and are coaxial, and interfaces of the two at least partially overlap, such that a sensor or a probe thereof mounted in the sensor mounting cavity may be inserted into an inlet side of the pump mounting cavity, i.e. inserted at an upstream side of the pump mounting cavity, to measure a temperature of fluid flowing through the pump mounting cavity; in this case, if a first water pump mounted in the pump mounting cavity stops moving, the sensor that is inserted at the upstream side of the pump mounting cavity may further be used to sense a temperature of fluid in another fluid sub-circuit that communicates with the flow channel and is located upstream of the pump mounting cavity, avoiding the problems of high cost, a greater number of components, difficult assembly and greater weight due to the requirement in the prior art to respectively provide a sensor in each fluid sub-circuit. The thermal management system of the present disclosure, by comprising the configuration of the fluid distribution assembly described above, may cause the first cooling liquid pipeline and the second cooling liquid pipeline to share the sensor arranged upstream of the first water pump, when the first water pump and the second water pump operate normally, to measure a parameter of cooling liquid in both cooling liquid pipelines; and enables the sensor to measure a parameter of cooling liquid in the second cooling liquid pipeline when the first water pump stops operating.

Demonstrative ways of implementing the fluid distribution assembly and the thermal management system provided in the present disclosure have been described above with reference to preferred embodiments, but those skilled in the art will understand that as long as the concept of the present disclosure is not deviated from, various changes and modifications could be made to the specific embodiments above, and various technical features and structures set forth in the present disclosure could be combined in various ways, without exceeding the scope of protection of the present disclosure, which is specified by the attached claims.

## Claims

1. A fluid distribution assembly (1), **characterized in that** the fluid distribution assembly (1) comprises:
a sensor (101);
a first distribution plate (10), the first distribution plate (10) being provided with a pump mounting cavity (12); and
a second distribution plate (20), which is fixed to a first side of the first distribution plate (10), to define a flow channel (30) between the first distribution plate (10) and the second distribution plate (20), the flow channel (30) being in fluid communication with the pump mounting cavity (12),
wherein the second distribution plate (20) is provided with a sensor mounting cavity (21), the sensor mounting cavity (21) being arranged opposite the pump mounting cavity (12); the sensor (101) is mounted in the sensor mounting cavity (21), and is inserted into the flow channel (30).

2. The fluid distribution assembly (1) as claimed in claim 1, **characterized in that** the pump mounting cavity (12) is provided with a first interface (120) that is located on the first distribution plate,
the sensor mounting cavity (21) is provided with a second interface (210) that is located on the second distribution plate, the sensor (101) being inserted into the flow channel (30) through the second interface (210); the first interface (120) is a fluid inlet of the pump mounting cavity (12),
wherein in a direction perpendicular to the second distribution plate (20), the first interface (120) and the second interface (210) at least partially overlap.

3. The fluid distribution assembly (1) as claimed in claim 2, **characterized in that** the pump mounting cavity (12) and the sensor mounting cavity (21) are coaxial.

4. The fluid distribution assembly (1) as claimed in claim 2, **characterized in that** the first interface (120) is located at a central position of a bottom wall of the pump mounting cavity (12); the second interface (210) is located at a central position of a bottom wall of the sensor mounting cavity (21).

5. The fluid distribution assembly (1) as claimed in claim 2, **characterized in that** the first interface (120) of the pump mounting cavity (12) is located at an end part of the flow channel (30).

6. The fluid distribution assembly (1) as claimed in claim 5, **characterized in that** a limiting part (211) is provided in the sensor mounting cavity (21), the limiting part (211) being used for forming a limiting fit with the sensor (101).

7. The fluid distribution assembly (1) as claimed in claim 6, **characterized in that** the limiting part (211) comprises a fixing clamping groove (212).

8. The fluid distribution assembly (1) as claimed in claim 1, **characterized in that** a first port (22) that communicates with the flow channel (30) is further provided on the second distribution plate (20), the first port (22) being arranged adjacent to the sensor mounting cavity (21); the first port (22) is an inlet for fluid to enter into the flow channel (30).

9. The fluid distribution assembly (1) as claimed in claim 1, **characterized in that** a flow channel groove (11) is provided on the first distribution plate (10), and the second distribution plate (20) is a cover plate.

10. A thermal management system, **characterized in that** the thermal management system comprises the fluid distribution system (1) as claimed in any one of claims 1 - 9.

11. The thermal management system as claimed in claim 10, **characterized in that** the thermal management system comprises:
a first cooling liquid pipeline (100), the first cooling liquid pipeline (100) being sequentially provided with the sensor (101) of the fluid distribution assembly (1), a first water pump (102) and an electric motor assembly (103) in a flow direction of fluid, wherein an upstream side of the sensor (101) communicates with a first connection point (221), and a downstream side of the electric motor assembly (103) communicates with a second connection point (222), a first port (22) in the fluid distribution assembly (1) that is arranged adjacent to the sensor mounting cavity (21) being arranged at the first connection point (221);
a second cooling liquid pipeline (200), the second cooling liquid pipeline (200) being sequentially provided with a second water pump (201) and a warm air core (202) in a flow direction of fluid, wherein an upstream side of the second water pump (201) communicates with the first connection point (221), and a downstream side of the warm air core (202) communicates with the second connection point (222);
a third cooling liquid pipeline (300), two ends thereof respectively communicating with the first connection point (221) and the second connection point (222).

12. The thermal management system as claimed in claim 11, **characterized in that** the first connection point (221) and the second connection point (222) comprise a three-way structure.

13. The thermal management system as claimed in claim 11, **characterized in that** a low-temperature radiator (301) is provided on the third cooling liquid pipeline (300), wherein an upstream side of the low-temperature radiator (301) communicates with the second connection point (222), and a downstream side of the low-temperature radiator communicates with the first connection point (221).

14. The thermal management system as claimed in claim 11, **characterized in that** the first water pump (102) is fixedly mounted in the pump mounting cavity (12) of the fluid distribution assembly (1).
